# NEUE EUROPÄISCHE PATENTSCHRIFT

(11) **EP 1 833 282 B2**
(45) Veröffentlichungstag und Bekanntmachung des Hinweises auf die Entscheidung über den Einspruch: **11.03.2015**
(45) Hinweis auf die Patenterteilung: 22.07.2009
(21) Anmeldenummer: 07111118.1
(22) Anmeldetag: 20.12.2002
(51) Int. Cl.: H05B 41/28, H05B 41/282

(54) **Elektronisches Vorschaltgerät und Betriebsverfahren für eine Gasentladungslampe**
Electronic cut-in unit and operating method for a gas discharge lamp
Appareil électronique et procédé de fonctionnement d'une lampe à décharge

(30) Priorität: 20.12.2001 DE 10163032
(43) Veröffentlichungstag der Anmeldung: 12.09.2007
(62) Teilanmeldung aus: 05021743.9
(73) Patentinhaber: Tridonic GmbH & Co KG, 6851 Dornbirn (AT)
(72) Erfinder: Ludorf, Werner, 83324 Ruhpolding (DE); Marent, Günter, 6780 Bartholomäberg (AT); Seibt, Marco, 85386 Eiching (DE); Zudrell-Koch, Stefan, 6850 Dornbirn (AT)
(74) Vertreter: Rupp, Christian

(56) Entgegenhaltungen:
- US-A- 5 414 862
- US-A- 5 705 897
- US-A- 5 748 460
- PATENT ABSTRACTS OF JAPAN Bd. 1996, Nr. 11, 29. November 1996 (1996-11-29) & JP 08 191567 A (CANON INC), 23. Juli 1996 (1996-07-23)

## Beschreibung

Die Erfindung betrifft ein elektronisches Vorschaltgerät sowie ein Betriebsverfahren für eine Gasentladungslampe, mit einem von einer Gleichspannungsquelle gespeisten Gleichspannungskonverter mit getaktetem Schalter und geregelter Ausgangsspannung, einem von der Ausgangsgleichspannung des Gleichspannungskonverters gespeisten Wechselrichter, und einer Regelschaltung, der ein Sollwertsignal sowie ein der Ausgangsgleichspannung des Gleichspannungskonverters entsprechendes Istwertsignal zugeführt wird, und die als Stellwertsignal pulsweitenmodulierte Einschaltimpulse für den getakteten Schalter erzeugt.

Ein derartiges elektronisches Vorschaltgerät ist beispielsweise nach der US 5,705,897 bekannt.

Die Gleichspannungsquelle für ein derartiges elektronisches Vorschaltgerät ist normalerweise ein an das Netz angeschlossener Gleichrichter. Der Gleichspannungskonverter bildet dann einen PFC-Zwischenkreis (PFC = power factor correction), dessen Aufgabe es ist, gegenüber dem Netz als quasi Ohm' sche Last zu erscheinen. Am Eingang des Gleichspannungskonverters liegen die Netzhalbwellen. Der Eingangsstrom ist von Impulsen gebildet, deren Amplitude ebenfalls Sinushalbwellen abbilden. Zwischen den Halbwellen der Eingangsspannung und den von den Amplituden der Stromimpulse gebildeten Halbwellen besteht keine Phasenverschiebung, so dass eine Blindbelastung des Netzes vermieden und eine Erzeugung von störenden Oberwellen auf ein zulässiges Maß reduziert wird.

Es sind verschiedene Typen von Gleichspannungskonvertern bekannt, die beispielsweise in dem Buch von U. Tietze und Ch. Schenk "Halbleiterschaltungstechnik", Springer-Verlag 1991, 9. Auflage, Seiten 561 bis 586 beschrieben sind. Allen gemeinsam ist, dass sie mindestens einen getakteten Schalter und mindestens zwei Speicherelemente enthalten. Für elektronische Vorschaltgeräte wird meistens ein Aufwärts-Konverter-Typ verwendet, der - vom Eingang zum Ausgang gesehen - aus einer Ladedrossel in einem ersten Längszweig, einem getakteten Schalter in einem ersten Querzweig, einer Diode in einem zweiten Längszweig und einem Speicherkondensator in einem zweiten Querzweig besteht.

Es besteht seit längerem die Tendenz, elektronische Vorschaltgeräte - soweit möglich - in integrierter Schaltungstechnik, d.h. als ASIC (application specific integrated circuit) herzustellen.

Der Erfindung liegt die Aufgabe zugrunde, einen Entwurf für die Regelschaltung für den getakteten Schalter anzugeben, der sich ebenfalls für die Realisierung im Rahmen eines ASIC eignet.

Die Aufgabe ist erfindungsgemäß durch die Merkmale der unabhängigen Ansprüche gelöst. Die abhängigen Ansprüche bilden den zentralen Gedanken der Erfindung in vorteilhafter Weise weiter.

Gemäss einem Aspekt der Erfindung enthält die Regelschaltung einen ersten und einen zweiten Zähler Die Bitbreite des ersten Zählers ist mindestens gleich der Bitbreite des zweiten Zählers. Der erste Zähler ist ein solcher mit umkehrbarer Zählrichtung, der in Abhängigkeit davon, ob das Istwertsignal größer oder kleiner als das Sollwertsignal ist, ggf. mit variabler Schrittweite in die eine oder die andere Richtung zählt. Der zweite Zähler führt zum Zeitpunkt des Einschaltens des Schalters einen neuen Zählvorgang aus. Die Ausgangssignale der beiden Zähler werden zur Gewinnung des Stellwertsignals in einem (digitalen) Komparator (ggf. nach einer Skalierung) verglichen. Die Pulsweite der Einschaltpulse für die getakteten Schalter ist durch den zeitlichen Abstand zwischen einem Startsignal für den neuen Zählvorgang des zweiten Zählers und dem Erreichen des Gleichstandes der miteinander verglichenen Zähler bestimmt.

Die Zähler und der Komparator sind standardisierte digitale Schaltungsbauteile, die sich im Sinne der Aufgabenstellung gut in ein ASIC-Design eingliedern lassen.

Als Gleichspannungskonverter ist für den vorliegenden Zweck ein an sich bekannter Aufwärtswandler geeignet, der - vom Eingang zum Ausgang hin betrachtet - eine Speicherdrossel in einem ersten Serienzweig, einen Schalter in einem ersten Querzweig, eine Diode in einem zweiten Längszweig und einen Ladekondensator in einem zweiten Querzweig aufweist.

Ausgehend von der Verwendung des vorstehend angegebenen Aufwärtswandlers kann eine zweckmäßige Weiterbildung der Erfindung ferner darin bestehen, dass mit dem zweiten Zähler ein Nulldurchgangsdetektor für den durch die Speicherdrossel des Gleichspannungskonverters fließenden Gleichstrom verbunden ist, welcher Nulldurchgangsdetektor das Rücksetzsignal für den zweiten Zähler auslösen kann, wenn der bei geöffnetem Schalter durch die Speicherdrossel fließende abklingende Gleichstrom den Nullpunkt erreicht.

Eine andere Ausgestaltung des erfindungsgemäßen elektronischen Vorschaltgerätes kann darin bestehen, dass das Istwertsignal mittels eines Gleichspannungssensors erzeugt wird, der die Ausgangsgleichspannung des Gleichspannungskonverters misst, dass das Istwertsignal und das Sollwertsignal in analoger Form den beiden Eingängen eines 1-bit-A/D-Wandlers zugeführt werden, der diese beiden Signale vergleicht und ausgangsseitig den Digitalwert EINS erzeugt, wenn das Istwertsignal größer als oder gleich dem Stellwertsignal ist, und der den Digitalwert NULL erzeugt, wenn das Istwertsignal kleiner als das Sollwertsignal ist, oder umgekehrt, dass der Ausgangs des 1-bit-A/D-Wandlers mit dem ersten Zähler verbunden ist, und dass der erste Zähler aufwärts zählt, wenn ihm der Digitalwert NULL zugeführt wird, und abwärts zählt, wenn ihm der Digitalwert EINS zugeführt wird, oder umgekehrt. In einer Verallgemeinerung dieses Gedankens kann die Abweichung zwischen Istwertsignal und Sollwertsignal auch als n-bit-Information verarbeitet werden, wobei die Schrittweite des Zählers dann in Abhängigkeit von der Höhe der Regelabweichung variiert.

Die Erfindung betrifft weiterhin Verfahren zum Betrieb eines elektronischen Vorschaltgeräts für eine Gasentladungslampe mit einem von einer Gleichspannungsquelle gespeisten Gleichspannungskonverter mit getaktetem Schalter und geregelter Ausgangsgleichspannung, einem von der Ausgangsgleichspannung des Gleichspannungskonverters gespeisten Wechselrichter, und einer Regelschaltung, der ein Sollwertsignal sowie ein der Ausgangsgleichspannung des Gleichspannungskonverters entsprechendes Istwertsignal zugeführt wird, und die Einschaltimpulse für den getakteten Schalter erzeugt. Das Verfahren weist dabei die Folgenden Schritte auf:
- Vergleichen des Istwertsignals mit dem Sollwertsignal zur Erzeugung eines digitalen Differenzsignals,
- Zuführen des digitalen Differenzsignals zu dem Zähleingang eines ersten Zählers, dessen Zählrichtung vom Vorzeichen des digitalen Differenzsignals abhängt,
- Vergleichen des Zählerstands oder des skalierten Zählerstands des ersten Zählers mit dem Zählerstand eines zweiten Zählers, der jeweils auf ein Start- oder RESET-Signal hin einen Zählvorgang beginnt,
- Einschalten des Schalters und Start des zweiten Zählers jeweils nach Ablauf einer vorbestimmten Zeit oder wenn der Strom durch eine Ladespule des Gleichspannungskonverters den Nullpunkt erreicht, und
- Ausschalten des Schalters, wenn der Zählerstand oder der skalierte Zählerstand des ersten Zählers gleich dem Zählerstand des zweiten Zählers ist.

Grmäss einem noch weiteren Aspekt der vorliegenden Erfindung wird das Istwertsignals mit dem Sollwertsignal zur Erzeugung eines digitalen Differenzsignals verglichen. Das digitale Differenzsignals wird digital gefiltert. Der Wert des gefilterten Differenzsignals wird mit dem Zählerstand eines zweiten Zählers verglichen, der jeweils auf ein Start- oder RESET-Signal hin einen Zählvorgang beginnt. Der Schalter (S) wird jeweils nach Ablauf einer vorbestimmten Zeit oder wenn der Strom durch eine Ladespule (L) des Gleichspannungskonverters den Nullpunkt erreicht, eingeschalten. Gelichzeitig wird der Zählvorgang des zweiten Zählers gestartet. Der Schalter wirtd ausgeschaltet, wenn der Wert des gefilterten Differenzsignals gleich dem Zählerstand des zweiten Zählers ist.

Ausführungsbeispiele der Erfindung sind nachfolgend anhand der Zeichnung beschrieben. Es zeigen:
- Fig. 1: ein Blockschaltbild eines elektronisches Vorschaltgerätes mit einer ersten Ausführungsform der erfindungsgemäßen Regelschaltung;
- Fig. 2: Zeitdiagramme
(a) des Zählverhaltens des zweiten Zählers,
(b) des Verlaufs des durch die Ladedrossel fließenden Stromes,
(c) des Rücksetzssignals (Uₙ) für den zweiten Zähler,
(d) der Einschaltimpulse für den getakteten Schalter, und
(e) der Systemtaktimpulse, die den Zählern
zugeführt werden;
- Fig. 3: ein Blockschaltbild einer verallgemeinerten Ausführungsform der erfindungsgemäßen Regelschaltung;

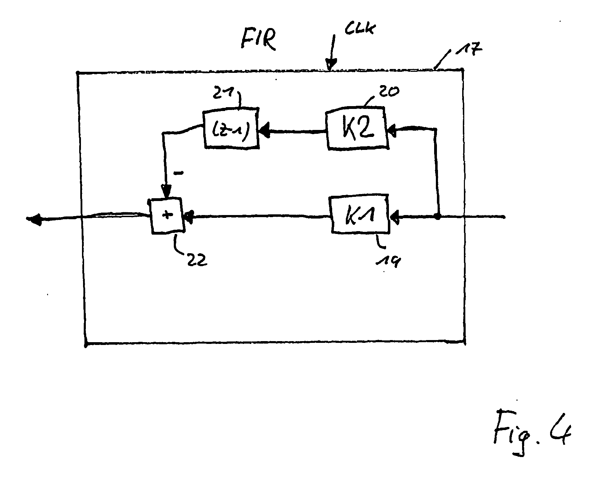

- Fig. 4: eine vergrößerte Darstellung des FIR-Filters in der Schaltung von Fig. 3,
- Fig.5a-c: den Verlauf des Strom durch die Ladespule in verschiedenen Szenarien, und
- Fig.6a-c: verschiedene Möglichkeiten zum Start bzw. Reset des zweiten Zählers in Figuren 1 und 3.

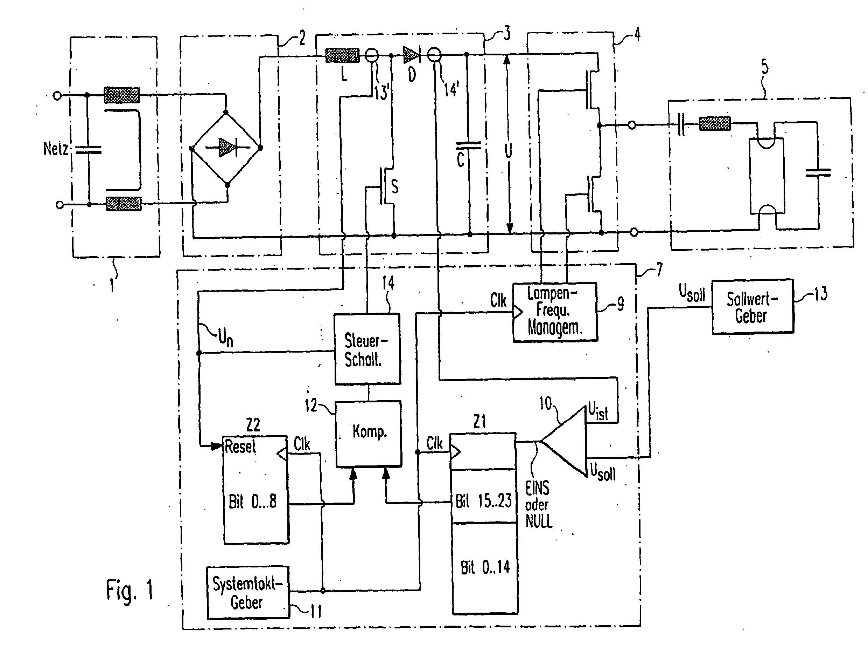

Das in Fig. 1 gezeigte Vorschaltgerät weist die nachfolgend erläuterten Schaltungsteile auf. Ein HF-Filter 1 ist mit dem Netz verbunden und führt einer Gleichrichterschaltung 2 die gefilterte Netzspannung zu. Die Gleichrichterschaltung 2 erzeugt an ihrem Ausgang Halbwellen der Netzspannung, die dem Gleichspannungskonverter 3 zugeführt werden. Der Gleichspannungskonverter 3 erzeugt an seinem Ausgang eine Spannung U, die durch Regelung unabhängig von Änderungen der Last konstant gehalten wird. Die Ausgangsgleichspannung U des Gleichspannungskonverters 3 wird einem Wechselrichter 4 zugeführt, an den sich eine Last 5 anschließt. Die Last 5 enthält die mit dem elektronischen Vorschaltgerät zu betreibendem Gasentladungslampe.

Es sei vorab angemerkt, dass alle Bauteile der im folgenden näher beschriebenen Regelung mittels Software, Hardware oder einer Hybridlösung ausgeführt werden können. Insbesondere der (langsame) Zähler Z1 kann mittels Software implementiert sein. Der Zähler Z2 kann vorzugsweise durch ein Hardware-Modul gebildet werden.

Der Gleichspannungskonverter 3 besteht aus einer Ladedrossel L in einem ersten Längszweig, einem getakteten Schalter S in einem ersten Querzweig, einer Diode D in einem zweiten Längszweig und einem Speicherkondensator C in einem zweiten Querzweig.

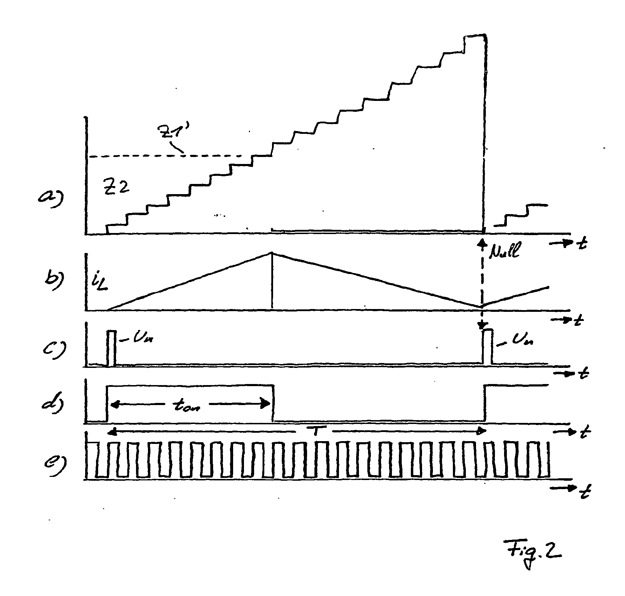

Der getaktete Schalter S wird mit pulsweitenmodulierten Einschaltimpulsen leitend geschaltet. Die Einschaltimpulse sind in Fig. 2(d) gezeigt. Die Einschaltzeit ist dort mit tₒₙ bezeichnet. Der zeitliche Abstand zwischen den Eingangsflanken der Einschaltimpulse ist mit T bezeichnet.

Wenn der Schalter S auf Durchgang geschaltet ist, fließt durch die Ladedrossel L ein ansteigender Ladestrom i_{L}. Wenn der Schalter S auf Unterbrechung geschaltet wird, entlädt sich die in der Drossel (Ladespule) L gespeicherte Energie über die Diode D auf den Speicherkondensator C. In der Entladephase fällt der durch die Ladedrossel L fließende Strom - wie in Fig. 2(b) erkennbar - ab und erreicht schließlich den Nullpunkt.

Je länger die Einschaltzeit tₒₙ des Schalters im Vergleich zur Gesamtzeit T ist, umso höher steigt die Ausgangsgleichspannung U des Gleichspannungskonverters 3 an. Wenn die Einschaltimpulse verkürzt werden, sinkt die Ausgangsgleichspannung U entsprechend ab. Durch gezielte Variation der Einschaltzeit tₒₙ ist es also möglich, die Ausgangsgleichspannung U konstant zu halten.

Die Einschaltimpulansteuerung für den getakteten Schalter S erfolgt durch die Regelschaltung 7. Der Regelschaltung 7 wird bspw. von einem externen Sollwertgeber 13 der analoge Sollwert Uₛₒₗₗ für die Ausgangsgleichspannung U zugeführt. Zur Erzeugung des Istwertes Uᵢₛₜ der Ausgangsgleichspannung U dient ein Gleichspannungssensor 14', der die Ausgangsgleichspannung U des Gleichspannungskonverters 3 misst.

Mit einem Nulldurchgangsdetektor 13' (bspw. einem Gleichstromsensor wie dargestellt oder einem Spannungsteiler) wird der Zeitpunkt erfasst, zu dem der durch die Ladedrossel L fließende Gleichstrom in der abklingenden Phase den Nullpunkt erreicht. Zu dem genannten Zeitpunkt wird in dem vorliegenden Ausführungsbeispiel das Rücksetzsignal Uₙ erzeugt (siehe Fig. 2(c)).

Im übrigen kann auch aus der am Punkt 13' anliegenden Spannung auf den Nullpunkt des Stroms durch die Ladedrossel geschlossen werden.

Die Regelschaltung 7 enthält einen ersten Zähler Z1 sowie einen zweiten Zähler Z2. Die beiden Zähler Z1 und Z2 sind mit einem Systemttaktgeber 11 verbunden, der die in Fig. 2(e) gezeigten Systemtaktimpulse CLK erzeugt.

Der zweite Zähler Z2 wird nur in Aufwärtszählrichtung betrieben und hat bspw. 2⁹ Zählstufen, die durch die Bits 0-8 repräsentiert sind. Der Reset-Eingang des zweiten Zählers Z2 ist in dem vorliegenden Ausführungsbeispiel mit dem Gleichstromsensor 13 verbunden. Wenn an dem Reset-Eingang das Rücksetzsignal Uₙ auftritt, wird der laufende Zählvorgang des zweiten Zählers Z2 abgebrochen. Gleichzeitig wird - wie in Fig. 2(a) gezeigt - der zweite Zähler Z2 zurückgesetzt, und es wird ein neuer Zählvorgang in Lauf gesetzt. Der Rücksetzvorgang des zweiten Zählers Z2 erfolgt somit zu dem Zeitpunkt, zu dem der durch die Ladedrossel L fließende Gleichstrom in der abklingenden Phase den Nullpunkt erreicht (s.o.).

Der erste Zähler Z1 hat bspw. 2²⁴ Zählstufen, die durch die Bits 0-23 repräsentiert sind. Er kann in beiden Richtungen zählen, also aufwärts und abwärts.

Mit dem ersten Zähler Z1 ist ferner der Ausgang eines (hier) 1-bit-A/D-Wandlers 10 verbunden, dessen beiden Eingängen das analoge Istwertsignal Uᵢₛₜ und das analoge Sollwertsignal Uₛₒₗₗ zugeführt werden. Am Ausgang des 1-bit-A/D-Wandlers wird ein digitales Signal in Form einer EINS oder NULL ausgegeben. Der Digitalwert EINS wird dabei erzeugt, wenn das Istwertsignal Uᵢₛₜ größer als oder gleich dem Sollwertsignal Uₛₒₗₗ ist. Der Digitalwert NULL wird dementsprechend erzeugt, wenn das Istwertsignal Uᵢₛₜ kleiner ist als das Sollwertsignal Uₛₒₗₗ.

Wenn dem ersten Zähler Z1 der Digitalwert NULL zugeführt wird, zählt er aufwärts. Wenn ihm der Digitalwert EINS zugeführt wird, zählt er abwärts.

Die Zählerstände der 2⁹ Zählstufen des zweiten Zählers Z2 werden durch einen Komparator 12 mit den entsprechenden 2⁹ höherwertigen Zählstufen des ersten Zählers Z1 verglichen. Die 2⁹ höherwertigen Zählstufen des ersten Zählers Z1 werden durch die Bits 15-23 repräsentiert. Der digitale Komparator 12 stellt den Zeitpunkt fest, zu dem die zu vergleichenden Bits der beiden Zähler Z1 und Z2 in Übereinstimmung gelangen und meldet diese Übereinstimmung einer Steuerschaltung 14 für den Schalter S. Der Steuerschaltung 14 wird ferner das von dem Gleichspannungssensor 13 erzeugte Rücksetzsignal Uₙ zugeführt. Die Steuerschaltung 14 schaltet den Schalter S ein, d.h. in den leitfähigen Zustand, wenn sie das Rücksetzsignal Uₙ erhält, und sie schaltet den Schalter S aus, d.h. in den Sperrzustand, wenn der Komparator 12 den Gleichstand (Übereinstimmung) der Zählerstände der zu vergleichenden Bits der beiden Zähler Z1 und Z2 meldet.

Die Steuerung des Wechselrichters 4 erfolgt über einen Schaltungsblock 9, der das Lampenfrequenzmanagement übernimmt.

Durch die hohe Zahl an Zählstufen des Zählers Z1 ist die Regelfrequenz relativ niedrig, und die Regeländerungen erfolgen in kleinen Schritten. Dadurch, dass die Zahl der Zählstufen des Zählers Z2 erheblich niedriger als die des Zählers Z1 ist, ist eine Überabtastung (Oversampling) gewährleistet. Wenn der Systemtaktgeber beispielsweise mit einer Taktfrequenz von 10 MHz arbeitet, so wird der Schalter S mit einer Schaltfrequenz zwischen 5 MHz und 39 kHz geschaltet. Die durch den Zähler Z1 bestimmte Regelfrequenz beträgt dagegen nur 75 Hz.

Die niederwertigen Zählstufen des Zählers Z1, die durch die Bits 0-14 repräsentiert sind, dienen praktisch als digitaler Integrator. Die höherwertigen Zählstufen, die durch die Bits 15-23 repräsentiert werden, bestimmten dagegen die Einschaltzeit tₒₙ für den Schalter S.

Der Gleichspannungskonverter 3 bildet einen PFC-Zwischenkreis für das elektronische Vorschaltgerät. Er gewährleistet, dass das Vorschaltgerät gegenüber dem Netz als Ohm'sche Last wirkt.

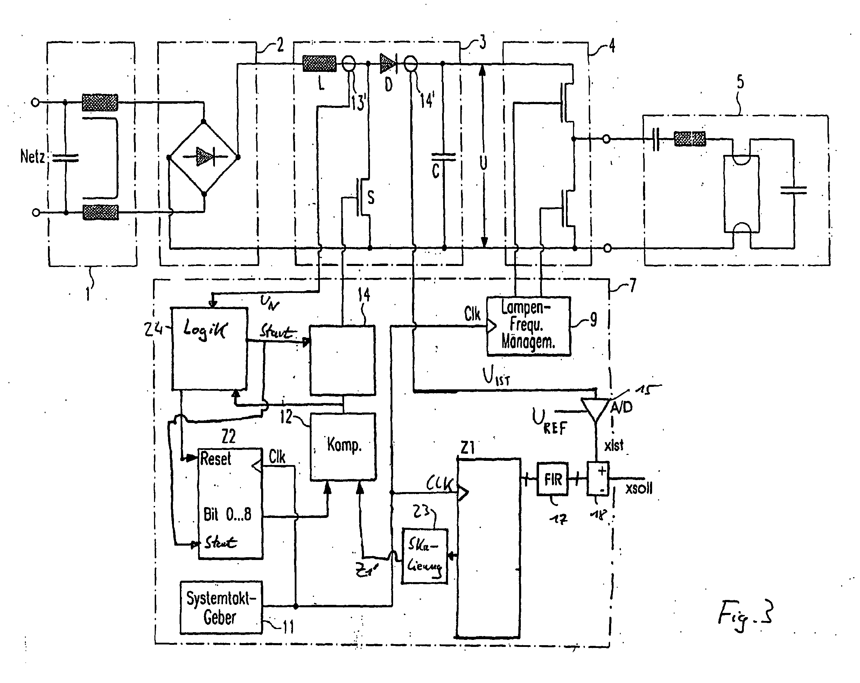

Fig. 1 zeigt wie gesagt ein spezielles Ausführungsbeispiel des erfindungsgemäßen Schaltungsprinzips, während Fig. 3 eine allgemeine Darstellung des erfindungsgemässen Konzepts zeigt. In Fig. 3 sind zur besseren Übersichtlichkeit nur Elemente der Regelschaltung dargestellt, wobei zu den Komponenten der in Fig. 1 gezeigten Schaltung identische Komponenten in Fig. 3 mit dem gleichen Bezugszeichen versehen sind.

Allgemein wird gemäss der Erfindung wie in Fig. 3 gezeigt die Differenz zwischen dem Sollwert U_{REF} und dem der Ausgangsgleichspannung U des Gleichspannungskonverters entsprechenden Istwert Uᵢₛₜ über einen A/D-Wandler 15 als n-bit-Information X_{IST} weitergegeben wird. Anstelle eines einfachen Vergleichs zwischen Sollwert Uₛₒₗₗ und Istwert Uᵢₛₜ durch den bei der Schaltung gemäß Fig. 1 vorgesehenen Komparator wird nunmehr also zusätzlich noch die Höhe der Regelabweichung zwischen den beiden Eingangswerten U_{REF} und Uᵢₛₜ erfaßt und im weiteren Verlauf der Regelschleife berücksichtigt. Diese n-bit-Information X_{IST} wird dem ersten Zähler Z1 zugeführt, der wiederum - je nachdem, ob der Sollwert U_{REF} größer ist als der Istwert Uᵢₛₜ oder umgekehrt - mit zu der Differenz proportionaler Schrittweite aufwärts bzw. abwärts zählt.

Die Schrittweite dieses Zählers Z1 ist also nun variabel und hängt von dem Absolutwert der Differenz X_{IST} ab. Liegt beispielsweise eine hohe Abweichung zwischen Sollwert U_{REF} und Istwert Uᵢₛₜ vor, so wird die Schrittweite erhöht, da hierdurch eine schnellere Anpassung der Einschaltzeit für den Schalter S erhalten wird. Umgekehrt wird bei lediglich geringen Abweichungen zwischen Sollwert Uₛₒₗₗ und Istwert Uᵢₛₜ die Schrittweite des Zählers Z1 herabgesetzt werden.

Die Steuerung der Schrittweite erfolgt über ein Digitalfilter, insb. einen als sog. FIR-Filter (FIR = Finite Impulse Response) 17 ausgebildeten Eingangsblock des Zählers Z1. Das Digitalfilter kann auch bspw. ein IIR (Infinite Impulse Response) Filter sein.

Das vorgeschaltete FIR-Filter 17 in dem vorliegenden Ausführungsbeispiel ist ein lineares, zeitdiskretes System, dessen Ausgangssignal die gewichtete Summe des aktuellen Eingangssignals sowie einer bestimmten Anzahl vergangener Abtastwerte darstellt. Die konkreten Eigenschaften des FIR-Filters können durch entsprechende Wahl der Gewichtungskoeffizienten eingestellt werden.

Gemäss der Implementierung in Fig.3 weist dieses FIR-Filter 17 einen Addierer 18 auf, der einen vorgegebenen digitalen Referenzwert X_{SOLL} von dem zugeführten Wert X_{IST} subtrahiert. Der Ausgang des Addierers 18 wird zwei Proportionalgliedern 19, 20 zugeführt, die eine Multiplikation mit Konstanten K1 bzw. K2 durchführen. Der Ausgang des Prorportionalglieds 20 wird einem Verzögerungsglied 21 zugeführt, das das Signal um einen Takt verzögert (z-1). Der verzögerte Wert wird dann in einem weiteren Addierer 22 von dem Ausgangswert des Proportionalglieds 19 subtrahiert. Der Ausgangswert des weiteren Addierers 22 wird dann dem Zähleingang des ersten Zählers Z1 zugeführt.

Insgesamt bildet die Kombination des FIR-Filters 17 mit dem ersten Zähler Z1 eine PI-Reglerstruktur. Der P-Anteil wird dabei durch die Kombination der differenzierenden Wirkung des Verzögerungsglieds 21 mit der integrierenden Wirkung des Zählers Z1 erreicht. Der I-Anteil wird entsprechend durch das Proportionalglied 19 und den Zähler Z1 gebildet.

Das Datenformat des Eingangs des FIR-Filters 17 ist üblicherweise kleiner als das des Ausgangs. Zumindest am Ausgang wird vorzugsweise ein Fixpoint-Format verwendet.

Der Ausgangswert des Zählers Z1 wird durch ein Skalierglied 23 bspw. durch einen ganzzahligen Faktor geteilt und das Ergebnis Z1' als erstes Eingangssignal an den Komparator 12 weitergegeben. Wenn der ganzzahlige Faktor eine Potenz von "2" ist, entspricht diese Skalierung dem Auslesen der höherwertigen Bits in Figur 1. Indessen können auch andere ganzzahlige Werte, aber auch Fliesskommawerte verwendet werden. Üblicherweise wird der Skalierungsfaktor indessen grösser als Eins sein.

Im übrigen ist in Figur 3 gezeigt, dass durch eine Logikeinheit 24 der RESET des Zählers Z2, der Einschaltvorgang des Schalters S (durch das Signal START in Figur 3) und der Nulldurchgang des Stroms durch die Ladespule voneinander unabhängig gewählt werden können.

Der Logikeinheit 24 wird dazu (optional) das Ausgangssignal des Nullpunktdetektors 13' zugeführt. Weiterhin wird ihr das Ausgangssignal des Komparators 12 zugeführt. Die Logikeinheit 24 erzeugt andererseits das RESET-Signal für den Zähler Z2 sowie das Startsignal START für die Steuereinheit 14 (bspw. ein Flip-Flop), auf welches Signal START hin die Steuereinheit 14 den Schalter S einschaltet (Beginn eines Einschaltpulses). Der Reset-Vorgang des Zählers Z2 kann ggf. auch schon vor dem Startvorgang des Zählers Z2 und somit unabhängig von dem Start des Zählvorgangs des Zählers Z2 erfolgen. In diesem Fall wird der Zählvorgang des Zählers Z2 (von Null ansteigend) ebenfalls durch das Signal START der Logikeinheit 24 ausgelöst.

Grundsätzlich kann die Logikeinheit 24 das Startsignal START für das Einschalten des Schalters S bei Erfassung des Nulldurchgangs des Stroms durch die Ladespule und/oder bei Ablauf einer definierten Zeit (bspw. erzeugt durch eine Zeitbasis bzw. einen weiteren Zähler der Logikeinheit 24) ausgeben.

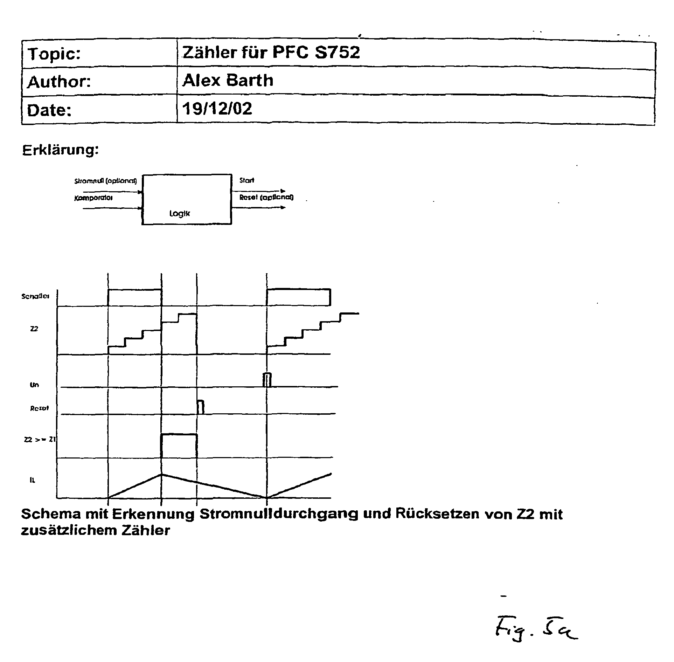

Die sich ergebenden Signalverläufe sind in Figuren 5a - 5c dargestellt und sollen nunmehr erläutert werden.

Figur 5a zeigt den Fall, dass beim Erfassen des Nulldurchgangs des Stroms durch die Ladespule der Zähler Z2 neu gestartet und der Schalter S eingeschaltet werden (Signal START). Der RESET-Vorgang des Zählers Z2 wird unabhängig davon zeitlich vor dem Start des Zählvorgangs durch das Signal RESET ausgelöst. Dies kann bspw. erfolgen, wenn die Logikeinheit 24 erfasst, dass ein weiterer Zähler (nicht dargestellt), der die Funktion einer Zeitbasis hat, einen bestimmten Stand (Höchststand) erreicht hat. Zu bemerken ist, dass der Reset-Vorgang weiterhin unabhängig und zeitlich nach dem Ausschalten des Schalters S durch dem Komparator 12 erfolgt, der Zähler Z2 läuft also nach dem Ausschalten des Schalters S noch eine gewisse Zeit weiter hoch.

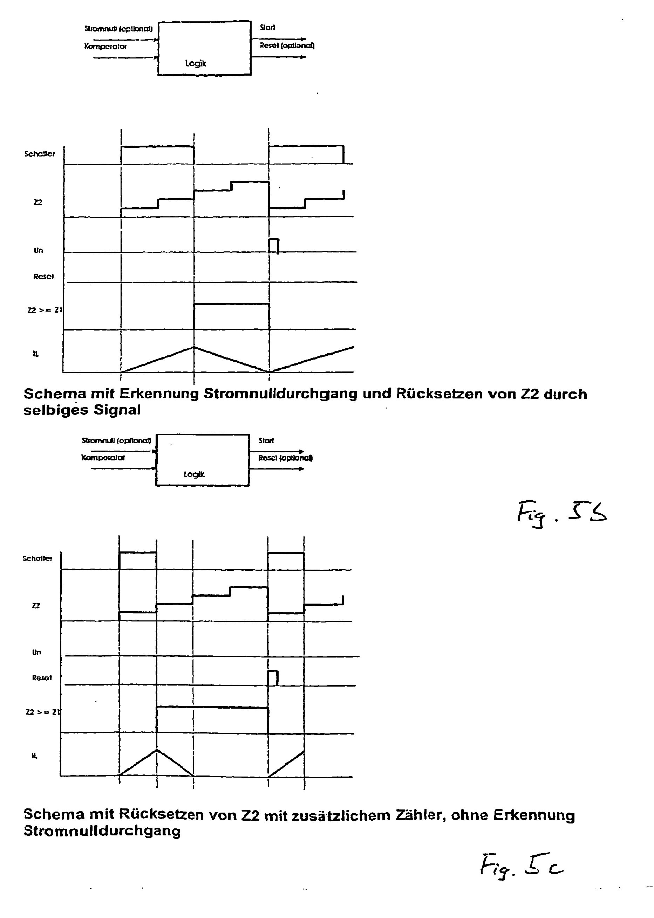

Figur 5b zeigt den Fall, dass wiederum beim Erfassen des Nulldurchgangs des Stroms durch die Ladespule der Zähler Z2 gestartet und der Schalter S eingeschaltet werden (Signal START). Es gibt indessen kein separates RESET- und STARTSignal für den Zähler Z2, vielmehr erfolgt in einem RESET und Start des Zählvorgangs des Zählers Z2 bei Detektion des Nulldurchgangs.

Figur 5c zeigt schliesslich den Fall, dass nicht durch Erfassen des Nulldurchgangs des Stroms durch die Ladespule, sondern nach Ablauf einer definierten Zeit (bspw. erfasst durch einen weiteren Zähler) der Zähler Z2 zu einem Reset-Vorgang veranlasst wird und neu gestartet und gleichzeitig der Schalter S eingeschaltet wird (Signal START). In diesem Fall erfolgt also der Einschaltvorgang des Schalters S in festen Abständen, allerdings ist die Einschaltpulsdauer variabel (PWM).

In jedem Fall fällt also einerseits der Neustart des zweiten Zählers Z2 mit dem Einschalten des Schalters S zusammen und wird andererseits der Schalter S ausgeschaltet, wenn die verglichenen Ausgangssignale der beiden Zähler Z1, Z2 Gleichstand erreichen.

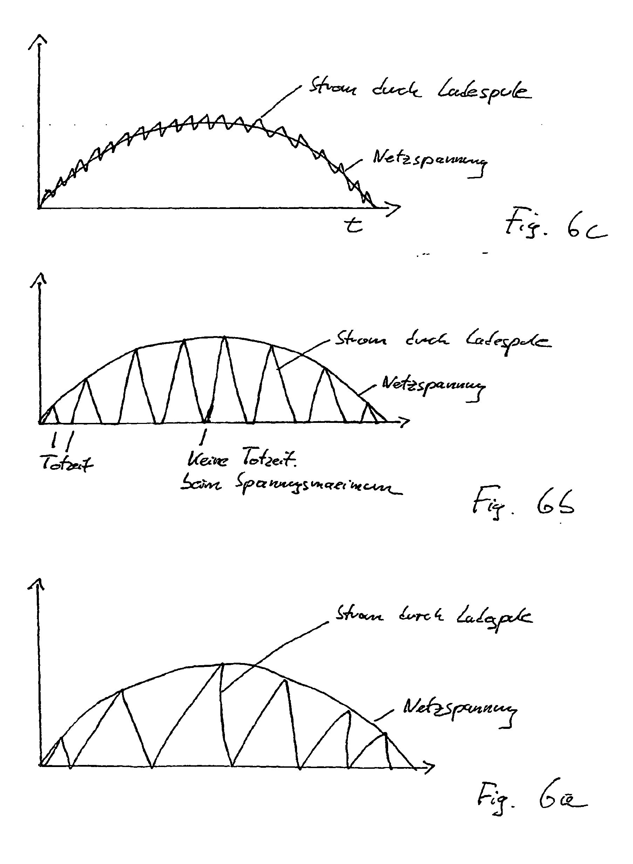

Mögliche zeitliche Verläufe des Gleichstroms durch die Ladedrossel im Verhältnis zum Netzstrom ist in Fig. 6a-6c gezeigt.

Wie in Fig. 6a gezeigt steigt bei Verwendung des Reset-Signals der Gleichstrom durch die Ladedrossel sofort wieder an, was auch "Borderline Control" genannt wird.

Wie in Fig. 6b gezeigt, kann weiterhin der Fall eintreten, dass zu dem Zeitpunkt, zu dem der Gleichstrom durch die Drossel bereits auf Null abgefallen ist, der zweite Zähler Z2 noch nicht an seinem Höchststand angelangt ist und der Schalter während einer Totzeit weiter geschlossen bleibt, in welcher Totzeit kein Strom durch die Drossel fliesst. Dies wird auch "Discontinous Conduction" genannt.

Andererseits kann wie in Figur 6c gezeigt der Fall eintreten, dass der Zähler Z2 seinen Höchststand zu einem Zeitpunkt erreicht, zu dem der Strom durch die Drossel noch nicht abgeklungen ist. Durch das entsprechende Schalten des Schalters wird als in diesem Fall der Gleichstrom durch die Drossel nie auf Null abfallen. Dies wird "Continous Conduction" genannt.

Die in Fig. 3 dargestellte Schaltung stellt eine allgemeine Darstellung der vorliegenden Erfindung dar, welches im Falle von n>1 durch die im Vergleich zu dem Komparator höhere Auflösung des A/D-Wandlers 15 die Möglichkeit eröffnet, die Höhe der Abweichung zwischen Sollwert Uₛₒₗₗ und Istwert Uᵢₛₜ zu berücksichtigen. Für den Fall, dass der A/D-Wandler 15 als 1-bit-Wandler verwendet wird und für die Multiplikationsfaktoren die Werte K₁=2 und K₂=0 (das Intergrier-Glied hat in diesem Fall keine Funktion) sowie als digitaler Referenzwert 0,5 gewählt werden, wird wiederum der Spezialfall eines 1-bit-PFC erhalten. Für die Verarbeitung der Signale gilt dann folgendes:

Sofern der aktuelle Istwert Uᵢₛₜ der Ausgangsgleichspannung größer ist als die Sollspannung Uₛₒₗₗ, gibt der 1-bit-A/D-Wandler 15 den Wert 1 aus. Der von dem Vergleichsblock 18 erhaltene Wert ist dann -1 + 0,5 = -0,5. Der von dem P-Glied 19 und damit dem Eingangsblock 17 berechnete Wert beträgt in diesem Fall -0,5 * 2 = -1, d.h., der Zähler Z1 zählt bei einem zu hohen Wert der Ausgangsgleichspannung abwärts, wodurch die Einschaltzeit für den Schalter S verkürzt wird. Liegt hingegen die Ausgangsgleichspannung Uᵢₛₜ unterhalb der Sollspannung Uₛₒₗₗ, so gibt der 1-bit-A/D-Wandler 15 den Wert 0 aus. Der von dem Vergleichsblock 18 erhaltene Wert ist dann 0 + 0.5 = +0,5 und der dem Zähler Zlzugeführte Wert beträgt 0,5 5 * 2 = 1. In diesem Fall zählt somit der erste Zähler Z1 aufwärts. Diese 1-bit-Variante stellt somit eine besonders einfache Möglichkeit dar, die Ausgangsgleichspannung zu regeln.

Sowohl in der 1-bit-Variante als auch in allgemeinen n-bit-Form weist die erfindungsgemäße Schaltung den Vorteil auf, dass sie aus standardisierten digitalen Schaltungsbauteilen besteht, die sich im Sinne der Aufgabenstellung gut in ein ASIC-Design eingliedern lassen.

## Patentansprüche

1. Verfahren zum Betrieb eines elektronischen Vorschaltgeräts für eine Gasentladungslampe, mit einem von einer Gleichspannungsquelle (1,2) gespeisten Gleichspannungskonverter (3) mit getaktetem Schalter (S) und geregelter Ausgangsgleichspannung (U), einem von der Ausgangsgleichspannung (U) des Gleichspannungskonverters (3) gespeisten Wechselrichter (4) und einer Regelschaltung (7), der ein Sollwertsignal (Uₛₒₗₗ) sowie ein der Ausgangsgleichspannung des Gleichspannungskonverters entsprechendes Istwertsignal (Uᵢₛₜ) zugeführt wird, und die Einschaltimpulse für den getakteten Schalter (S) erzeugt,
**gekennzeichnet durch die folgenden Schritte:**
- Vergleichen (10, 15) des Istwertsignals mit dem Sollwertsignal zur Erzeugung eines digitalen Differenzsignals (X_{IST}),
- Integration (Z1) des digitalen Differenzsignals (X_{IST}),
- Vergleichen des integrierten Differenzsignals mit dem Zählerstand eines Zählers (Z2), der jeweils auf ein Start- oder RESET-Signal hin einen Zählvorgang beginnt,
- Einschalten des Schalters (S) und Start des Zählers (Z2) jeweils nach Ablauf einer vorbestimmten Zeit oder wenn der Strom **durch** eine Ladespule (L) des Gleichspannungskonverters den Nullpunkt erreicht, und
- Ausschalten des Schalters (S), wenn der Wert des integrierten Differenzsignals gleich dem Zählerstand des Zählers (Z2) ist.

2. Verfahren nach Anspruch 1,
bei dem das digitale Differenzsignal das Vorzeichen und/oder die Höhe wiedergibt.

3. Elektronisches Vorschaltgerät für eine Gasentladungslampe, mit
- einem von einer Gleichspannungsquelle (1,2) gespeisten Gleichspannungskonverter (3) mit getaktetem Schalter (S) und geregelter Ausgangsgleichspannung (U),
- einem von der Ausgangsgleichspannung (U) des Gleichspannungskonverters (3) gespeisten Wechselrichter (4) und
- einer Regelschaltung (7), der ein Sollwertsignal (Uₛₒₗₗ) sowie ein der Ausgangsgleichspannung des Gleichspannungskonverters entsprechendes Istwertsignal (Uᵢₛₜ) zugeführt wird, und die Einschaltimpulse für den getakteten Schalter (S) erzeugt,
**gekennzeichnet durch**:
- Mittel (10, 15) zum Vergleichen des Istwertsignals mit dem Sollwertsignal zur Erzeugung eines digitalen Differenzsignals (X_{IST}),
- einen Integrator (Z1), der das digitale Differenzsignals (X_{IST}) integriert,
- Mittel zum Vergleichen (12) des **durch** den Integrator (Z1) verarbeiteten Differenzsignals mit dem Zählerstand eines Zählers (Z2), der jeweils auf ein Start- oder RESET-Signal hin einen Zählvorgang beginnt, und
- Mittel zum Einschalten des Schalters (S) und Start des Zählers (Z2) jeweils nach Ablauf einer vorbestimmten Zeit oder wenn der Strom **durch** eine Ladespule (L) des Gleichspannungskonverters den Nullpunkt erreicht, und zum Ausschalten des Schalters (S), wenn der Wert des integrierten Differenzsignals gleich dem Zählerstand des Zählers (Z2) ist.

4. Elektronisches Vorschaltgerät nach Anspruch 3, wobei die Mittel (10, 15) zum Vergleichen des Istwertsignals mit dem Sollwertsignal ein digitales Differenzsignal (X_{IST}) mit mehr als einem Bit erzeugen.

5. Elektronisches Vorschaltgerät nach Anspruch 3 oder 4,
**dadurch gekennzeichnet,**
**dass** der Gleichspannungskonverter (3) ein Aufwärtswandler mit - vom Eingang zum Ausgang hin betrachtet - einer Ladespule (L) in einem ersten Serienzweig, mit dem Schalter (S) in einem ersten Querzweig, einer Diode (D) in einem zweiten Längszweig und einem Ladekondensator (C) in einem zweiten Querzweig ist.

6. Elektronisches Vorschaltgerät nach Anspruch 5,
**dadurch gekennzeichnet**,
ein Nullpunktdetektor (13) für den durch die Speicherdrossel (D) des Gleichspannungskonverters (3) fließenden Gleichstrom mit einer Logikeinheit (24) verbunden ist, die den Startvorgang des Zählers (Z2) sowie das gleichzeitige Einschalten des Schalters (S) veranlasst, sobald der Nullpunktdetektor (13) den Nulldurchgang des Stroms durch die Ladespule erfasst.

7. Elektronisches Vorschaltgerät nach einem der Ansprüche 3 bis 5,
**dadurch gekennzeichnet,**
**dass** eine Logikeinheit (24) den Schalter (S) jeweils nach Ablauf einer vorbestimmten Zeitdauer schliesst und gleichzeitig den Zähler (Z2) zu einem neuen Startvorgang veranlasst.

## Claims

1. Method for operating an electronic ballast for a gas discharge lamp, comprising a DC-to-DC converter (3) fed by a DC voltage source (1, 2) and having a clocked switch (S) and a regulated DC output voltage (U), further comprising an inverter (4) fed by the DC output voltage (U) of the DC-to-DC converter (3) and a regulation circuit (7), to which a setpoint value signal (Uₛₑₜ) and an actual value signal (U_{act}), corresponding to the DC output voltage of the DC-to-DC converter are supplied, and which generates switch-on pulses for the clocked switch (S),
**characterized by** the following steps:
- comparing (10, 15) the actual value signal with the setpoint value signal for generating a digital difference signal (X_{ACT}),
- integrating (Z1) the digital difference signal (X_{ACT}),
- comparing the integrated difference signal with the counter reading of a counter (Z2), which begins a counting operation in each case in response to a start or RESET signal,
- switching on the switch (S) and starting the counter (Z2) each time a predetermined time has elapsed or when the current through a charging coil (L) of the DC-to-DC converter reaches the zero point, and
- switching off the switch (S) when the value of the integrated difference signal is equal to the counter reading of the counter (Z2).

2. Method according to Claim 1,
in which the digital difference signal reproduces the mathematical sign and/or the magnitude.

3. Electronic ballast for a gas discharge lamp, comprising
- a DC-to-DC converter (3) fed by a DC voltage source (1, 2) and having a clocked switch (S) and a regulated DC output voltage (U),
- an inverter (4) fed by the DC output voltage (U) of the DC-to-DC converter (3), and
- a regulation circuit (7), to which a setpoint value signal (Uₛₑₜ) and an actual value signal (U_{act}) corresponding to the DC output voltage of the DC-to-DC converter is supplied, and which generates switch-on pulses for the clocked switch (S),
**characterized by**:
- means (10, 15) for comparing the actual value signal with the setpoint value signal for generating a digital difference signal (X_{ACT}),
- an integrator (Z1), which integrates the digital difference signal (X_{ACT}),
- means for comparing (12) the difference signal processed by the integrator (Z1) with the counter reading of a counter (Z2), which begins a counting operation in each case in response to a start or RESET signal, and
- means for switching on the switch (S) and starting the counter (Z2) each time a predetermined time has elapsed or when the current through a charging coil (L) of the DC-to-DC converter reaches the zero point and for switching off the switch (S) when the value of the integrated difference signal is equal to the counter reading of the counter (Z2).

4. Electronic ballast according to Claim 3,
wherein the means (10, 15) for comparing the actual value signal with the setpoint value signal generate a digital difference signal (X_{ACT}) with more than one bit.

5. Electronic ballast according to Claim 3 or 4,
**characterized**
**in that** the DC-to-DC converter (3) is a boost converter comprising, when viewed from the input to the output, a charging coil (L) in a first series branch, the switch (S) in a first parallel branch, a diode (D) in a second series branch and a charging capacitor (C) in a second parallel branch.

6. Electronic ballast according to Claim 5,
**characterized**
**in that** a zero point detector (13) for the direct current flowing through the storage inductor (D) of the DC-to-DC converter (3) is connected to a logic unit (24), which initiates the starting operation of the counter (Z2) and the simultaneous switching-on of the switch (S) as soon as the zero point detector (13) detects the zero crossing of the current through the charging coil.

7. Electronic ballast according to one of Claims 3 to 5,
**characterized**
**in that** a logic unit (24) closes the switch (S) each time a predetermined time period has elapsed and simultaneously causes the counter (Z2) to initiate a new starting operation.

## Revendications

1. Procédé pour faire fonctionner un ballast électronique pour une lampe à décharge de gaz, avec un convertisseur de tension continue (3) alimenté par une source de tension continue (1,2) et comprenant un commutateur cadencé (S) et une tension continue de sortie asservie (U), un onduleur (4) alimenté par la tension continue de sortie (U) du convertisseur de tension continue (3) et un circuit de régulation (7), auquel sont envoyés un signal de valeur de consigne (Usoll) ainsi qu'un signal de valeur réelle (Uist) correspondant à la tension continue de sortie du convertisseur de tension continue, et lequel génère les impulsions de commutation pour le commutateur cadencé (S),
**caractérisé par** les étapes suivantes :
- comparaison (10, 15) du signal de valeur réelle avec le signal de valeur de consigne pour générer un signal digital de différence (Xist),
- intégration (Z1) du signal digital de différence (Xist),
- comparaison du signal de différence intégré avec la valeur d'un compteur (Z2), lequel démarre respectivement un processus de comptage au moment d'un signal de démarrage ou d'un signal RESET,
- commutation à l'état passant du commutateur (S) et démarrage du compteur (Z2) respectivement après expiration d'un temps prédéfini ou lorsque le courant à travers une bobine de charge (L) du convertisseur de tension continue atteint la valeur zéro, et
- commutation à l'état non passant du commutateur (S) lorsque la valeur du signal de différence intégré est égale à la valeur du compteur (Z2).

2. Procédé selon la revendication 1,
dans lequel le signal digital de différence reproduit le signe et/ou la valeur.

3. Ballast électronique pour une lampe à décharge de gaz, avec
- un convertisseur de tension continue (3) alimenté par une source de tension continue (1,2) et comprenant un commutateur cadencé (S) et une tension continue de sortie asservie (U),
- un onduleur (4) alimenté par la tension continue de sortie (U) du convertisseur de tension continue (3) et
- un circuit de régulation (7), auquel sont envoyés un signal de valeur de consigne (Usoll) ainsi qu'un signal de valeur réelle (Uist) correspondant à la tension continue de sortie du convertisseur de tension continue, et lequel génère les impulsions de commutation pour le commutateur cadencé (S),
**caractérisé par**:
- des moyens (10, 15) pour comparer le signal de valeur réelle avec le signal de valeur de consigne pour générer un signal digital de différence (Xist),
- un intégrateur (Z1), qui intègre le signal digital de différence (Xist),
- des moyens pour comparer (12) le signal de différence traité par l'intégrateur (Z1) avec la valeur d'un compteur (Z2), lequel démarre respectivement un processus de comptage au moment d'un signal de démarrage ou d'un signal RESET, et
- des moyens pour commuter à l'état passant le commutateur (S) et démarrer le compteur (Z2) respectivement après expiration d'un temps prédéfini ou lorsque le courant à travers une bobine de charge (L) du convertisseur de tension continue atteint la valeur zéro, et pour commuter à l'état non passant le commutateur (S) lorsque la valeur du signal de différence intégré est égale à la valeur du compteur (Z2).

4. Ballast électronique selon la revendication 3,
dans lequel les moyens (10, 15) pour comparer le signal de valeur réelle avec le signal de valeur de consigne génèrent un signal digital de différence (Xist) avec plus de un bit.

5. Ballast électronique selon la revendication 3 ou 4,
**caractérisé en ce que**
le convertisseur de tension continue (3) est un convertisseur boost avec - depuis l'entrée jusqu'à la sortie - une bobine de charge (L) dans une première branche série, avec le commutateur (S) dans une première branche transversale, une diode (D) dans une deuxième branche longitudinale et un condensateur de charge (C) dans une deuxième branche transversale.

6. Ballast électronique selon la revendication 5,
**caractérisé en ce que**
un détecteur de valeur nulle (13) pour le courant continu circulant à travers l'impédance de stockage (D) du convertisseur de tension continue (3) est raccordé à une unité logique (24), qui déclenche le processus de démarrage du compteur (Z2) ainsi que la commutation simultanée à l'état passant du commutateur (S), dès que le détecteur de valeur nulle (13) détecte le passage par zéro du courant à travers la bobine de charge.

7. Ballast électronique selon l'une des revendications 3 à 5,
**caractérisé en ce que**
une unité logique (24) ferme le commutateur (S) respectivement après expiration d'une période de temps prédéfinie et déclenche simultanément un nouveau processus de démarrage du compteur (Z2).
